(19) Europäisches Patentamt
European Patent Office
Office européen des brevets

(11) **EP 3 650 200 B1**

(12) **FASCICULE DE BREVET EUROPEEN**

(45) Date de publication et mention
de la délivrance du brevet:
**29.03.2023 Bulletin 2023/13**

(21) Numéro de dépôt: **19206987.0**

(22) Date de dépôt: **04.11.2019**

(51) Classification Internationale des Brevets (IPC):
**B29C 64/106** (2017.01)   **B29C 64/20** (2017.01)
**B29C 64/214** (2017.01)   **B33Y 40/00** (2015.01)

(52) Classification Coopérative des Brevets (CPC):
**B29C 64/106; B29C 64/20; B29C 64/214;
B33Y 40/00**

(54) **PROCÉDÉ ET DISPOSITIFS DE DÉTECTION ET CALIBRATION RAPIDES D'UNE IMPRIMANTE 3D UTILISANT UN MATÉRIAU VISQUEUX**

VERFAHREN UND VORRICHTUNGEN ZUR SCHNELLERKENNUNG UND -KALIBRIERUNG EINES 3D-DRUCKERS, DER EIN VISKOSES MATERIAL VERWENDET

METHOD AND DEVICES FOR QUICK DETECTION AND CALIBRATION OF A 3D PRINTER USING A VISCOUS MATERIAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.11.2018 FR 1860230**

(43) Date de publication de la demande:
**13.05.2020 Bulletin 2020/20**

(73) Titulaire: **Prodways**
**78130 Les Mureaux (FR)**

(72) Inventeur: **ALLANIC, André-Luc**
**78270 MOUSSEAUX-SUR-SEINE (FR)**

(74) Mandataire: **Santarelli**
**49, avenue des Champs-Elysées**
**75008 Paris (FR)**

(56) Documents cités:
**FR-A1- 2 790 418    US-A1- 2017 057 171**

Remarques:
Le dossier contient des informations techniques présentées postérieurement au dépôt de la demande et ne figurant pas dans le présent fascicule.

## Description

<u>DOMAINE TECHNIQUE DE L'INVENTION</u>

La présente invention concerne le domaine de l'impression tridimensionnelle, dite impression 3D, à l'aide d'un dispositif appelé « imprimante 3D ». En particulier, l'invention concerne un procédé et des systèmes mécaniques de détection et calibration des appareils de fabrication d'objets, par exemple des objets céramiques, en trois dimensions, par stéréolithographie, sous forme d'impression par couches successives à partir d'un matériau visqueux.

<u>DESCRIPTION DE L'ART ANTERIEUR</u>

Les principales techniques de fabrication d'objets en céramique, pour des pièces de petites séries, utilisent le pressage, l'extrusion ou l'injection. Par ailleurs, l'usinage des pièces frittées mène souvent à des défauts dans le matériau de l'objet fini. Dans ce contexte, les techniques de prototypage rapide offrent une alternative très prometteuse pour l'élaboration de pièces céramiques complexes sans utiliser d'outillage ni avoir recours à l'usinage.

Sur les machines de stéréolithographie de dernière génération, le laser est généralement remplacé par une diode émettant en lumière ultra-violette (UV) et un système optique comprenant un projecteur DLP (sigle de *Digital Light Processing* en terminologie anglo-saxonne), dans lequel est intégré un masque dynamique de très haute résolution - DMD (sigle de *Digital Micro-mirror Device* en terminologie anglo-saxonne). Ce système à haute résolution spatiale (e.g. une résolution spatiale de 32 μm) permet la fabrication de pièces avec des détails très fins alliant un gain de productivité important par rapport aux machines existantes sur le marché de l'impression 3D.

De façon connue, la fabrication d'objets tridimensionnels métalliques ou céramiques par impression 3D peut être effectuée sur un lit de poudre, par agglomération de matière à l'aide, par exemple, d'un balayage infrarouge, ou à l'aide d'une composition liquide ou pâteuse qui est utilisée pour créer un objet tridimensionnel dit cru, ce dernier étant ensuite délianté puis fritté.

Une composition pâteuse est typiquement composée de poudre et d'un polymère de type résine photo-polymérisable permettant le durcissement de la matière. Dans ce type de procédé, la composition pâteuse utilisée a typiquement une viscosité dynamique comprise entre 5 à 20 Pascal seconde (Pa.s), offrant des conditions d'adaptation de la vitesse d'écoulement optimales dans la machine d'impression utilisée.

La mise en couche de ces matériaux visqueux nécessite des racleurs particuliers utilisant des lames, qui définissent l'altitude de la couche déposée au-dessus d'une plateforme de construction.

Le brevet US 6,764,636 décrit, notamment en référence aux figures 3a à 3c, un exemple de racleurs pouvant être utilisés à ces fins. Selon cet exemple, les racleurs (ensembles 40 et 41 comprenant chacun un pousseur et deux rouleurs) déposent alternativement de gauche à droite et de droite à gauche des couches de matériaux sur le plan de travail 45 situé sur un support de fabrication (le cas échéant sur une couche précédemment déposée). L'épaisseur de la couche déposée par le racleur 40 c'est-à-dire la distance entre le bas du racleur 40 et plan de travail 45, est définie par réglage d'une butée 47. De même, l'épaisseur de la couche déposée par le racleur 41 est définie par le réglage d'une butée 48.

Il est important que cette épaisseur soit maîtrisée. Si l'épaisseur est trop fine, la pièce fabriquée sera difficile à décrocher du plan de travail 45. En effet, la solidification du matériau dans une imprimante 3D se fait typiquement sur une profondeur légèrement supérieure à l'épaisseur de la couche souhaitée, de manière à permettre l'adhésion de la couche courante à la couche précédente. Si l'épaisseur de la couche est trop faible, la profondeur de solidification dépasse fortement l'épaisseur de la couche et l'adhésion est donc trop forte, ce qui peut rendre la pièce difficile à détacher de son support. Inversement, si l'épaisseur de la couche est trop grande, la profondeur de solidification n'est pas assez grande pour assurer une bonne adhésion avec le plan de travail 45. La pièce risque donc de se décrocher lors du mouvement de racleur. De plus, il est important que l'épaisseur de la couche déposée par le racleur 40 soit la plus proche possible de l'épaisseur de la couche déposée par la lame 41 pour éviter que la pièce finale soit composée de couches ayant des épaisseurs hétérogènes, certaines étant plus épaisses que d'autres.

Les butées 47 et 48 doivent être réglées pour satisfaire tous ces objectifs. Cette procédure de réglage est connue mais est complexe et la qualité du réglage dépend de la compétence de l'opérateur. Ce réglage complexe doit, de préférence, être refait chaque fois qu'un élément déterminant est modifié, par exemple lorsque les racleurs 40 et 41 sont remplacés ou lorsque le support de fabrication est modifié. En utilisation industrielle, ces évènements sont courants : les racleurs s'usent et le support de fabrication est typiquement remplacé entre deux productions.

La complexité du réglage est donc un inconvénient pour des applications industrielles. Elle entraîne une augmentation du prix de revient final des pièces fabriquées.

Pour remédier à cet inconvénient, les solutions de l'art antérieur consistent généralement à améliorer l'ergonomie du réglage. Par exemple, dans l'imprimante 3D connue sous le nom de ProMaker V6000 (ProMaker V6000 est une marque), commercialisée à partir de 2014 par la société Prodways, l'équivalent des butées 47 et 48 est un axe motorisé avec une mesure précise des positions qui permet de retrouver rapidement et de façon fiable des réglages préexistants. L'utilisateur peut en effet régler précisément la position de chaque moteur actionnant les deux racleurs.

En revanche, la détermination des réglages repose toujours sur les compétences d'un opérateur qui prédétermine des réglages. De plus, les réglages prédéterminés n'autorisent pas l'utilisation de supports de fabrication interchangeables et légèrement différents entre eux comme cela se produit couramment au milieu industriel.

Il existe donc un besoin de rendre le réglage indépendant de l'opérateur et robuste aux changements des éléments mécaniques pertinents.

RESUME DE L'INVENTION

L'invention permet de résoudre au moins un des problèmes exposés précédemment.

L'invention, selon la revendication 1, a ainsi pour objet un procédé de fabrication d'un objet tridimensionnel par dépôts successifs de couches d'un matériau visqueux comprenant les étapes suivantes :

- fournir une surface de travail sur laquelle des couches sont déposées ;
- fournir un volume de matériau visqueux à proximité de la surface de travail ;
- appliquer au moins une portion du volume de matériaux visqueux sur la surface de travail en déplaçant sensiblement parallèlement à la surface de travail au moins un racleur lié à un capteur de proximité, ledit racleur étant maintenu, lors de son déplacement, à une distance prédéterminée de ladite surface de travail,

caractérisé en ce que la distance prédéterminée est calculée en fonction d'au moins une valeur de calibration définie lors d'une opération préalable d'étalonnage comprenant les étapes suivantes :

- positionner au moins une butée de calibration à une distance comprise entre une première distance et une seconde distance de la surface de travail, la au moins une butée de calibration étant configurée pour permettre le déclenchement d'un signal en cas de contact entre la au moins une butée de calibration et le capteur de proximité ;
- déplacer le racleur lié au capteur de proximité vers une de la au moins une butée de calibration ;
- arrêter le déplacement du racleur dès qu'un signal indique un contact entre la butée de calibration et le capteur de proximité ; et
- estimer la distance entre le racleur et la surface de travail après l'arrêt du déplacement, la au moins une valeur de calibration comprenant la distance estimée.

Le procédé selon l'invention permet ainsi un réglage de la hauteur des racleurs indépendant d'un opérateur et robuste aux changements des éléments mécaniques pertinents. Il permet également la réduction des coûts de fabrication d'un objet.

Selon un mode de réalisation, le procédé comprend en outre, durant l'étape préalable d'étalonnage, une étape d'estimation d'une position initiale correspondant à la position du racleur, après l'arrêt du déplacement, selon un axe et un point de référence liés à un moteur utilisé pour modifier la hauteur du racleur, la au moins une valeur de calibration comprenant la position initiale.

Selon un mode de réalisation, l'axe et le point de référence sont liés à un moteur utilisé pour modifier la hauteur du racleur.

Selon un mode de réalisation, le déplacement est un déplacement vertical vers une butée de calibration haute ou vers une butée de calibration basse.

Selon un mode de réalisation, la première distance est égale à -100mm.

Selon un mode de réalisation, la seconde distance est égale à +100mm.

Selon un mode de réalisation, l'opération préalable d'étalonnage comprend une étape initiale de positionnement du racleur lié au capteur de proximité à une distance prédéterminée de la butée de calibration.

Un exemple de dispositif de fabrication d'un objet tridimensionnel par dépôts successifs de couches d'un matériau visqueux, le dispositif comprenant un microprocesseur configuré pour mettre en oeuvre chacune des étapes de l'opération préalable d'étalonnage du procédé décrit précédemment ainsi qu'un programme d'ordinateur pour la fabrication d'un objet tridimensionnel par dépôts successifs de couches d'un matériau visqueux, le programme d'ordinateur comprenant des instructions pour mettre en oeuvre chacune des étapes de l'opération préalable d'étalonnage du procédé décrit précédemment lorsque le programme d'ordinateur est exécuté par un ordinateur.

Les avantages procurés par ce dispositif et ce programme d'ordinateur sont similaires à ceux décrits précédemment.

BREVE DESCRIPTION DES FIGURES

D'autres avantages, buts et caractéristiques de la présente invention ressortent de la description détaillée qui suit, faite à titre d'exemple non limitatif, au regard des dessins annexés dans lesquels :

- la figure 1, comprenant les figures 1A et 1B, illustre schématiquement un exemple de racleurs selon l'art antérieur, selon lequel le réglage des racleurs est effectué par ajustement de butées ;
- la figure 2 illustre schématiquement une partie d'une imprimante 3D comprenant un racleur selon un mode de réalisation de l'invention avec des capteurs de proximités qui détectent, à l'aide de force d'appui, le niveau auquel le racleur peut descendre en direction de la surface de travail ;

- la figure 3 illustre des étapes d'un procédé selon des modes de réalisation pour contrôler la hauteur de racleurs durant la fabrication d'un objet ; et
- la figure 4 illustre un exemple d'un dispositif de traitement d'informations adapté à mettre en oeuvre, au moins partiellement, un mode de réalisation de l'invention.

DESCRIPTION DETAILLEE DE L'INVENTION

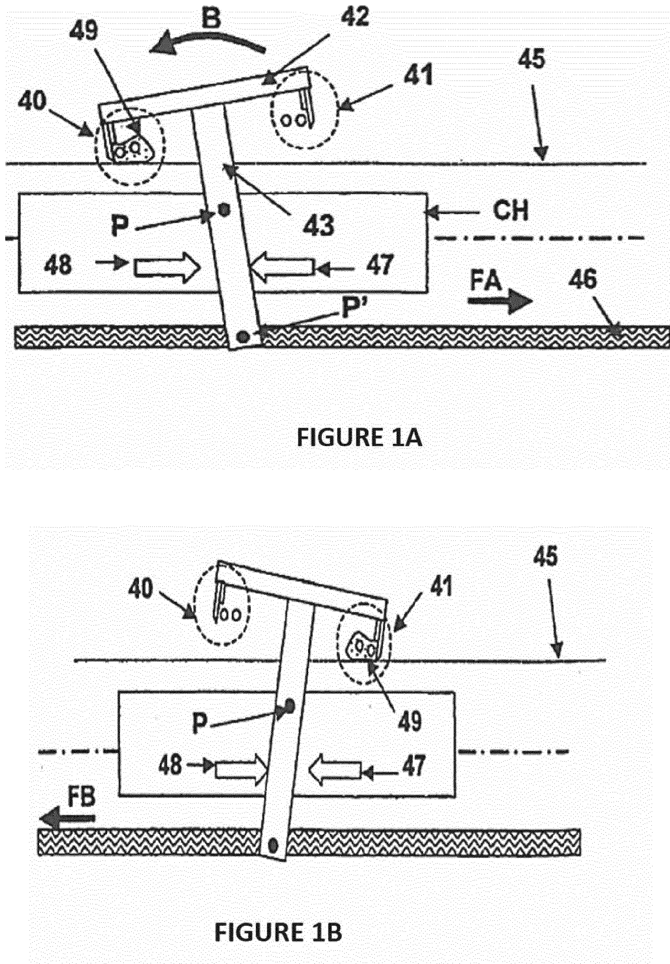

Comme illustré sur la figure 1A, le racleur 40 affleure la surface de travail 45 située sur la surface de la dernière couche de matériau déposée en vue de fabriquer un objet ou sur le support de fabrication sur lequel est fabriqué l'objet lorsqu'aucune couche n'a encore été déposée. Le racleur est ici attaché à la pièce comprenant les éléments 42 et 43 qui peut pivoter pour atteindre deux positions, par rotation autour d'un premier pivot P, sous l'action d'une force de traction exercée, par exemple, par une courroie 46 reliée à l'élément 42 à l'aide d'un second pivot P'. Comme illustré, le mouvement de la courroie 46 dans la direction FA provoque le basculement de la pièce comprenant les éléments 42 et 43 jusqu'à entrer en contact avec la butée 47. Cette butée peut être réglée pour ajuster la distance entre le bas du racleur 40 et la surface de travail 45. Par exemple, un faible ajustement de la butée 47 dans la direction FA permet à la pièce comprenant les éléments 42 et 43 d'augmenter l'amplitude du mouvement dans la direction de rotation B, ce qui a pour effet de réduire la distance entre le bas du racleur 40 et la surface de travail 45. Inversement, un ajustement de la butée 47 dans la direction opposée à la direction FA a pour effet d'augmenter la distance entre le bas du racleur 40 et la surface de travail 45.

De façon similaire, lorsque la pièce comprenant les éléments 42 et 43 est pivotée de manière à rapprocher le bas du racleur 41 de la surface de travail 45, comme illustré sur la Figure 1B (lorsque le mouvement de la courroie 46 correspond à la direction FB), le réglage de la butée 48 permet l'ajustement de la distance entre le bas du racleur 41 et la surface de travail 45. Par exemple, ajuster la butée 48 dans la direction FB a pour effet de réduire la distance entre le bas du racleur 41 et la surface de travail 45.

Comme décrit précédemment, le réglage des butées 47 et 48 est délicat et nécessite une compétence spéciale des opérateurs. En effet, les distances entre le bas des racleurs 40 et 41 et la surface de travail 45 sont appréciées et mesurées par des moyens variant selon les opérateurs.

L'invention a notamment pour objet de permettre d'automatiser et fiabiliser les mesures nécessaires au réglage des racleurs 40 et 41 à l'aide d'une méthode visant les ajustements appliqués aux butées 47 et 48.

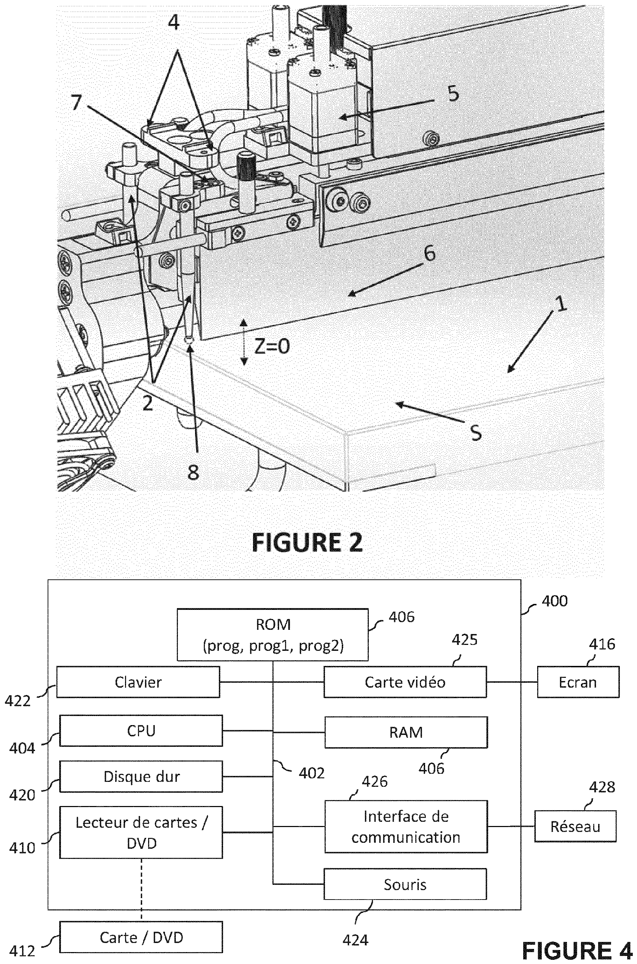

La figure 2 illustre schématiquement une partie d'une imprimante 3D comprenant un racleur selon un mode de réalisation de l'invention avec des capteurs de proximités qui détectent, à l'aide de force d'appui, le niveau auquel le racleur peut descendre en direction de la surface de travail.

Plus précisément, la figure 2 illustre un ensemble comprenant deux racleurs (dont un seul est visible) ainsi qu'un mécanisme de calibration de la hauteur des racleurs, permettant un réglage précis de la hauteur des racleurs.

Comme illustré, le système comprend deux butées de calibration : une butée de calibration inférieure correspondant à un élément de référence 1 (typiquement le support de fabrication, aussi appelé marbre) dont le plan supérieur coïncide avec la surface de travail (avant que ne soit déposée la première couche) et des butées de calibration supérieures 4. Ces butées de calibration sont de préférence rigidement fixées à un support de l'imprimante 3D. Le système comprend également deux racleurs, dont le racleur 6, mobiles par rapport aux butées de calibration, pouvant se régler en hauteur et se déplacer selon un axe parallèle à la surface de travail ainsi que des capteurs de proximité, comprenant le capteur de proximité 2 associé au racleur 6.

Le système comprend en outre des moteurs fiables et précis pour modifier la hauteur des racleurs, notamment en vue des dépôts successifs du matériau visqueux utilisé pour fabriquer un objet (étant observé qu'après un réglage initial de la hauteur des racleurs, un dépôt de matériau visqueux est typiquement effectué après un mouvement du support de fixation vers le bas, sans déplacement vertical des racleurs).

Ainsi, par exemple, le moteur 5 permet de modifier la hauteur du racleur 6. Le moteur 5 permet de déplacer le racleur 6 et le capteur de proximité 2 par rapport à la surface de travail S, et donc par rapport aux butées de calibration 1 et 4. Il en est de même des racleurs, capteurs de proximité et moteurs non représentés.

Comme décrit précédemment, le plan supérieur de l'élément de référence 1 (support de fabrication ou marbre) coïncide ici avec la surface de travail (avant le dépôt de la première couche), formant une butée de calibration située à une distance nulle de la surface de travail S. Selon un mode de réalisation particulier, les butées de calibration 4 sont situées à une distance prédéterminée, par exemple une distance comprise entre +50 millimètres et +150 millimètres, de préférence une distance de +100 millimètres, de la surface de travail S.

Il convient de noter que cette distance n'est donnée qu'à titre d'illustration. Selon d'autres modes de réalisation, les butées de calibration 4 sont situées à une distance inférieure à 50 millimètres voire négative par exemple -100 millimètres donc en dessous de la surface de travail.

Comme illustré sur la figure 2, le capteur de proximité 2 permet, lors du déplacement du racleur vers le bas ou vers le haut, de détecter un contact vers le bas avec l'élément de référence 1 (support de fabrication ou marbre), point de contact référencé 8, ou un contact vers le haut avec la butée de calibration 4, point de contact référencé 7. La détection d'un contact vers le bas et/ou vers le haut permet une calibration du mécanisme en vue de régler la hauteur du racleur 6.

Selon un mode de réalisation, la détermination de la position du racleur 6 selon un axe vertical, correspondant au déplacement contrôlé par le moteur 5, se fait à l'aide d'une distance initiale et d'une position initiale déterminées durant une phase de calibration. Cette phase de calibration peut comprendre les étapes suivantes :

- vérifier que le racleur 6 n'est pas en contact avec la butée de calibration inférieure 1, par exemple en le plaçant quelques millimètres au-dessus de cette butée de calibration ;
- descendre ensuite le racleur 6 et le capteur de proximité 2 par incrément de faible valeur, par exemple par incrément d'une valeur inférieure à un millimètre, par exemple par incrément de dix micromètres. Il est observé ici que cet incrément peut être ajusté dynamiquement lors de la descente du racleur 6 et du capteur de proximité 2, pour obtenir des mouvements plus rapides lorsqu'ils sont éloignés de la butée de calibration et plus précis lorsqu'ils sont proches de la butée de calibration ;
- après chaque déplacement d'un incrément, effectuer un test pour déterminer si le capteur de proximité 2 a détecté le contact avec la butée de calibration 1 ;
- si le contact n'est pas détecté, répéter l'étape de descente du racleur 6 et du capteur de proximité 2 et l'étape de test jusqu'à la détection de contact entre le capteur de proximité 2 et la butée de calibration 1 ;
- lorsque le contact est détecté, définir la distance mesurée entre la partie basse du racleur 6 et la surface de travail S comme la distance initiale Di et définir la position de la partie basse du racleur 6 selon l'axe de moteur 5 et un point de référence comme la position initiale Pi.

La distance initiale et la position initiale permettent alors de contrôler précisément la position du racleur 6.

Ainsi, par exemple, lorsqu'une première couche de matériau doit être déposée sur le support de fabrication, par exemple une couche ayant une épaisseur contrôlée E, le racleur 6 est déplacé, selon un axe sensiblement perpendiculaire à la surface de travail S, à l'aide du moteur 5, en positionnant le racleur à une position P calculée de la façon suivante :

$$P = Pi + (E - Di)$$

De façon similaire, la calibration peut être effectuée à l'aide d'une butée de calibration haute.

Les couches suivantes de matériau visqueux sont typiquement déposées en abaissant le support de fabrication, sans modifier la hauteur des racleurs.

Ainsi, le réglage des butées de contrôle de hauteur des racleurs devient automatisable et fiable, ne dépendant donc pas de la compétence d'un opérateur. Par ailleurs, tout changement de butée est automatiquement pris en compte par la procédure. A titre d'illustration, dans un usage industriel, les supports de fabrication (marbres) sur lesquels sont fabriqués les objets sont typiquement changés entre deux productions. Avec cette procédure, le réglage des racleurs s'adapte à toutes variations entre les différents supports de fabrication.

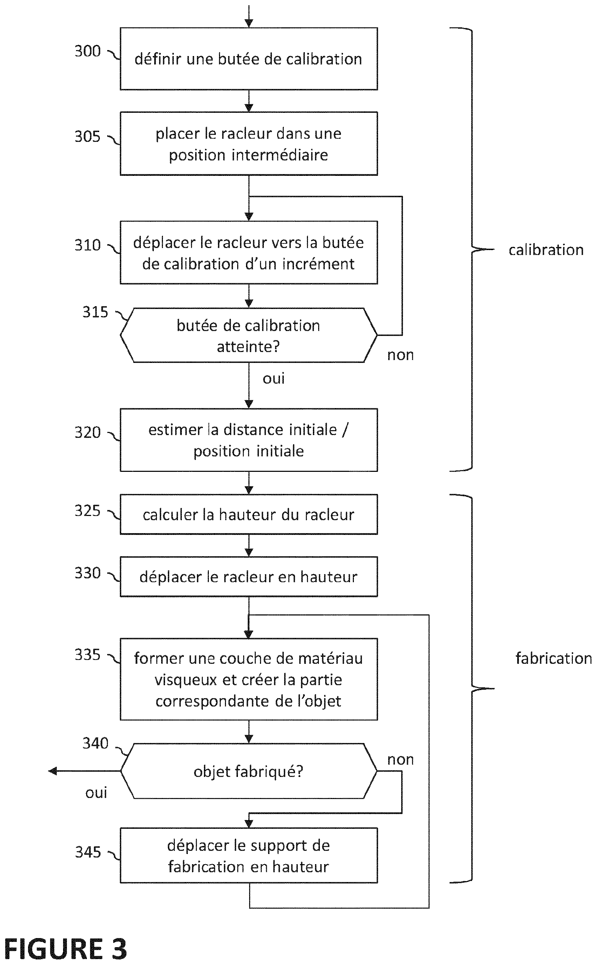

La figure 3 illustre des étapes d'un procédé selon des modes de réalisation pour contrôler la hauteur de racleurs durant la fabrication d'un objet. Comme illustré, ces étapes comprennent des étapes de calibration et des étapes de fabrication.

Une première étape de calibration a pour objet de définir au moins une butée de calibration (étape 300), par exemple une butée basse (par exemple la butée de calibration 1 sur la figure 2) ou une butée haute (par exemple la butée de calibration 4 sur la figure 2).

Dans une étape suivante (étape 305), le racleur est positionné dans une position intermédiaire de telle sorte que le capteur de proximité associé au capteur concerné ne soit pas en contact avec la butée de calibration définie précédemment.

Le racleur est ensuite déplacé d'un incrément, par exemple dix micromètres, vers la butée de calibration précédemment définie (étape 310) et un test est effectué pour déterminer si le capteur de proximité associé au capteur concerné est en contact avec la butée de calibration définie précédemment (étape 315).

Si le capteur de proximité associé au capteur concerné n'est pas en contact avec la butée de calibration définie précédemment, les étapes de déplacement du racleur et de test (étapes 310 et 315) sont répétées.

Au contraire, si le capteur de proximité associé au capteur concerné est en contact avec la butée de calibration définie précédemment, une distance initiale et, de préférence, une position initiale, sont estimées (étape 320). Comme décrit ci-dessus, la distance initiale peut correspondre à la distance entre la butée de calibration et la partie basse du racleur lorsque le capteur de proximité associé au racleur concerné entre en contact avec la butée de calibration définie précédemment. La position initiale peut être la position de la partie basse du racleur sur un axe vertical de déplacement du racleur (typiquement l'axe du moteur contrôlant la hauteur du racleur) par rapport à un point de référence pouvant correspondre, par exemple, à la butée de calibration.

La distance initiale et, de préférence, la position initiale estimées peuvent ensuite être utilisées dans une phase de fabrication pour contrôler la hauteur du racleur.

Dans des modes de réalisation, la position initiale peut être fixée à zéro.

A ces fins, une première étape a pour objet de calculer la hauteur de la partie basse du racleur en fonction de l'épaisseur de la couche de matériau visqueux à déposer, de la distance initiale et, le cas échéant, de la position initiale (étape 325). Le racleur est alors positionné, en hauteur, selon la hauteur calculée (étape 330).

Dans une étape suivante (étape 335), une couche de matériau visqueux est déposée et la partie correspondante de l'objet en cours de fabrication est réalisée.

Un test est ensuite effectué pour déterminer si toutes les couches de l'objet ont été traitées (étape 340).

Si toutes les couches de l'objet n'ont pas été traitées, le support de fabrication est déplacé selon un axe vertical (étape 345), typiquement vers le bas, et les étapes de dépôt d'une couche de matériaux visqueux et de réalisation de la partie correspondante de l'objet en cours de fabrication sont répétées jusqu'à ce que toutes les couches aient été traitées.

La figure 4 illustre un exemple de dispositif pouvant être utilisé pour mettre en oeuvre, au moins partiellement, un mode de réalisation, notamment des étapes décrites précédemment pour contrôler la hauteur de racleurs.

Le dispositif 400 est par exemple un calculateur.

Le dispositif 400 comporte de préférence un bus de communication 402 auquel sont reliés :

- une unité centrale de traitement ou microprocesseur 404 (CPU, sigle de *Central Processing Unit* en terminologie anglo-saxonne) ;
- une mémoire morte 406 (ROM, acronyme de *Read Only Memory* en terminologie anglo-saxonne) pouvant comporter le système d'exploitation et des programmes tels que "Prog" ; et
- une mémoire vive ou mémoire cache 408 (RAM, acronyme de *Random Access Memory* en terminologie anglo-saxonne) comportant des registres adaptés à enregistrer des variables et paramètres créés et modifiés au cours de l'exécution des programmes précités.

Optionnellement, le dispositif 400 peut également disposer des éléments suivants :

- un disque dur 420 pouvant comporter les programmes "Prog" précités et des données traitées ou à traiter selon l'invention ;
- un lecteur 410 de support amovible de stockage 412 tel qu'une carte mémoire ou un disque, par exemple un disque DVD ;
- une carte graphique 414 reliée à un écran 416 ;
- un clavier 422 et une souris 424 ou tout autre dispositif de pointage comme un crayon optique, un écran tactile ou une télécommande permettant à l'utilisateur d'interagir avec les programmes selon l'invention ; et
- une interface de communication 426 reliée à un réseau de communication distribué 428, par exemple un réseau de communication sans fil et/ou un réseau de communication local, l'interface étant apte à transmettre et à recevoir des données.

Le bus de communication permet la communication et l'interopérabilité entre les différents éléments inclus dans le dispositif 400 ou reliés à lui. La représentation du bus n'est pas limitative et, notamment, l'unité centrale est susceptible de communiquer des instructions à tout élément du dispositif 400 directement ou par l'intermédiaire d'un autre élément du dispositif 400.

Le code exécutable de chaque programme permettant à l'appareil programmable de mettre en oeuvre les processus selon l'invention, en particulier pour contrôler la hauteur de racleurs, peut être stocké, par exemple, dans le disque dur 420 ou en mémoire morte 406.

Selon une variante, le code exécutable des programmes pourra être reçu par l'intermédiaire du réseau de communication 428, via l'interface 426, pour être stocké de façon identique à celle décrite précédemment.

De manière plus générale, le ou les programmes pourront être chargés dans un des moyens de stockage du dispositif 400 avant d'être exécutés.

L'unité centrale 404 va commander et diriger l'exécution des instructions ou portions de code logiciel du ou des programmes selon l'invention, instructions qui sont stockées dans le disque dur 420 ou dans la mémoire morte 406 ou bien dans les autres éléments de stockage précités. Lors de la mise sous tension, le ou les programmes qui sont stockés dans une mémoire non volatile, par exemple le disque dur 420 ou la mémoire morte 406, sont transférés dans la mémoire vive 408 qui contient alors le code exécutable du ou des programmes selon l'invention, ainsi que des registres pour mémoriser les variables et paramètres nécessaires à la mise en oeuvre de l'invention.

La présente invention a été décrite et illustrée dans la présente description détaillée en référence aux figures jointes. Toutefois, la présente invention ne se limite pas aux formes de réalisation présentées. D'autres variantes et modes de réalisation peuvent être déduits et mis en oeuvre par la personne compétente dans le domaine de l'invention à la lecture de la présente description et des figures annexées. A titre d'illustration, les capteurs de proximité mis en oeuvre peuvent être des capteurs de proximité sans contact, permettant de déterminer précisément une position par rapport à une pièce sans toucher cette dernière.

Dans les revendications, le terme « comporter » n'exclut pas d'autres éléments ou d'autres étapes. L'article indéfini « un » n'exclut pas le pluriel. Un seul processeur ou plusieurs autres unités peuvent être utilisés pour mettre en oeuvre l'invention. Les différentes caractéristiques présentées et/ou revendiquées peuvent être avantageusement combinées. Leur présence dans la description ou dans des revendications dépendantes différentes n'exclut pas, en effet, la possibilité de les combiner. Les signes de référence ne sauraient être compris comme limitant la portée de l'invention.

**Revendications**

1. Procédé de fabrication d'un objet tridimensionnel par dépôts successifs de couches d'un matériau visqueux comprenant les étapes suivantes :

   - fournir une surface de travail (S) sur laquelle des couches sont déposées
   - fournir un volume de matériau visqueux à proximité de la surface de travail ;
   - appliquer au moins une portion du volume de matériaux visqueux sur la surface de travail en déplaçant sensiblement parallèlement à la surface de travail au moins un racleur (6) lié à un capteur de proximité (2) ledit racleur (6) étant maintenu, lors de son déplacement, à une distance prédéterminée de ladite surface de travail (S),

   **caractérisé en ce que** la distance prédéterminée est calculée en fonction d'au moins une valeur de calibration (1,4) définie lors d'une opération préalable d'étalonnage comprenant les étapes suivantes :

   - positionner au moins une butée de calibration (1,4) à une distance comprise entre une première distance et une seconde distance de la surface de travail (S), la au moins une butée de calibration (1, 4) étant configurée pour permettre le déclenchement d'un signal en cas de contact entre la au moins une butée de calibration (1,4) et le capteur de proximité (2)
   - déplacer (310) le racleur (6) lié au capteur de proximité (2) vers une de la au moins une butée de calibration (1,4) ;
   - arrêter le déplacement du racleur (6) dès qu'un signal indique un contact entre la butée de calibration (1,4) et le capteur de proximité (2) ; et
   - estimer (320) la distance entre le racleur (6) et la surface de travail après l'arrêt du déplacement, la au moins une valeur de calibration comprenant la distance estimée.

2. Procédé selon la revendication 1 comprenant en outre, durant l'étape préalable d'étalonnage, une étape d'estimation d'une position initiale correspondant à la position du racleur, après l'arrêt du déplacement, selon un axe et un point de référence liés à un moteur utilisé pour modifier la hauteur du racleur, la au moins une valeur de calibration comprenant la position initiale.

3. Procédé selon la revendication 2, selon lequel l'axe et le point de référence sont liés à un moteur utilisé pour modifier la hauteur du racleur.

4. Procédé selon l'une quelconque des revendications 1 à 3 selon lequel le déplacement est un déplacement vertical vers une butée de calibration haute ou vers une butée de calibration basse.

5. Procédé selon l'une quelconque des revendications 1 à 4 selon lequel la première distance est égale à -100mm.

6. Procédé selon l'une quelconque des revendications 1 à 5 selon lequel la seconde distance est égale à +100mm.

7. Procédé selon l'une quelconque des revendications 1 à 6 selon lequel l'opération préalable d'étalonnage comprend une étape initiale de positionnement du racleur lié au capteur de proximité à une distance prédéterminée de la butée de calibration.

**Patentansprüche**

1. Verfahren zur Herstellung eines dreidimensionalen Objekts durch aufeinanderfolgende Ablagerungen von Schichten eines viskosen Materials, die folgenden Schritte umfassend:

   - Bereitstellen einer Arbeitsfläche (S), auf der Schichten abgelagert werden,
   - Bereitstellen eines Volumens viskosen Materials in der Nähe der Arbeitsfläche,
   - Auftragen mindestens eines Teils des Volumens viskoser Materialien auf die Arbeitsfläche, indem mindestens ein mit einem Näherungssensor (2) verbundener Abstreifer (6) im Wesentlichen parallel zur Arbeitsfläche verschoben wird, wobei der Abstreifer (6) bei seiner Verschiebung in einem vorbestimmten Abstand von der Arbeitsfläche (S) gehalten wird,

   **dadurch gekennzeichnet, dass** der vorbestimmte Abstand in Abhängigkeit von mindestens einem Kalibrierungswert (1, 4) berechnet wird, der während eines vorhergehenden Eichungsvorgangs definiert wurde, die folgenden Schritte umfassend:

   - Positionieren mindestens eines Kalibrieranschlags (1, 4) in einem Abstand zwischen einem ersten Abstand und einem zweiten Abstand von der Arbeitsfläche (S), wobei der mindestens eine Kalibrieranschlag (1, 4) konfiguriert ist, um die Auslösung eines Signals zu ermöglichen, wenn der mindestens eine Kalibrieranschlag (1, 4) mit dem Näherungssensor (2) in Kontakt kommt,
   - Verschieben (310) des mit dem Näherungssensor (2) verbundenen Abstreifers (6) zu einem der mindestens einen Kalibrieranschläge (1, 4),
   - Stoppen der Verschiebung des Abstreifers (6), sobald ein Signal einen Kontakt zwischen dem Kalibrieranschlag (1, 4) und dem Näherungssensor (2) anzeigt, und

- Schätzen (320) des Abstands zwischen dem Abstreifer (6) und der Arbeitsfläche nach dem Stoppen der Verschiebung, wobei der mindestens eine Kalibrierungswert den geschätzten Abstand umfasst.

**2.** Verfahren nach Anspruch 1, ferner, während des vorhergehenden Eichungsschritts, einen Schritt zum Schätzen einer initialen Position umfassend, die der Position des Abstreifers, nach dem Stoppen der Verschiebung, auf einer Achse und einem Bezugspunkt entspricht, die mit einem Motor in Verbindung stehen, der zum Ändern der Höhe des Abstreifers verwendet wird, wobei der mindestens eine Kalibrierungswert die initiale Position umfasst.

**3.** Verfahren nach Anspruch 2, wobei die Achse und der Bezugspunkt mit einem Motor in Verbindung stehen, der zum Ändern der Höhe des Abstreifers verwendet wird.

**4.** Verfahren nach einem der Ansprüche 1 bis 3, wobei die Verschiebung eine vertikale Verschiebung zu einem hohen Kalibrieranschlag oder zu einem niedrigen Kalibrieranschlag ist.

**5.** Verfahren nach einem der Ansprüche 1 bis 4, wobei der erste Abstand gleich -100 mm ist.

**6.** Verfahren nach einem der Ansprüche 1 bis 5, wobei der zweite Abstand gleich +100 mm ist.

**7.** Verfahren nach einem der Ansprüche 1 bis 6, wobei der vorhergehende Eichungsvorgangs einen initialen Schritt zum Positionieren des mit dem Näherungssensor verbundenen Abstreifers in einem vorbestimmten Abstand vom Kalibrieranschlag umfasst.

**Claims**

**1.** Method for manufacturing a three-dimensional object by successive depositions of layers of a viscous material, comprising the following steps:

- providing a working surface (S) on which layers are deposited;
- providing a volume of viscous material in proximity to the working surface;
- applying at least a portion of the volume of viscous material to the working surface by moving, substantially parallel to the working surface, at least one recoater blade (6) linked to a proximity sensor (2), said recoater blade (6) being held, during its movement, at a predetermined distance from said working surface (S),

**characterised in that** the predetermined distance is calculated according to at least one calibration value (1, 4) defined during a prior calibration operation comprising the following steps:

- positioning at least one calibration stop (1, 4) at a distance comprised between a first distance and a second distance from the working surface (S), the at least one calibration stop (1, 4) being configured to enable the triggering of a signal in the case of contact between the at least one calibration stop (1, 4) and the proximity sensor (2);
- moving (310) the recoater blade (6) linked to the proximity sensor (2) towards one of the at least one calibration stop (1, 4);
- stopping the movement of the recoater blade (6) as soon as a signal indicates a contact between the calibration stop (1, 4) and the proximity sensor (2); and
- estimating (320) the distance between the recoater blade (6) and the working surface after the stopping of the movement, the at least one calibration value comprising the estimated distance.

**2.** Method according to claim 1 further comprising, during the prior calibration step, a step of estimating an initial position corresponding to the position of the recoater blade, after the stopping of the movement, in relation to an axis and a reference point both linked to a motor used for modifying the height of the recoater blade, the at least one calibration value comprising the initial position.

**3.** Method according to claim 2 wherein the axis and the reference point are linked to a motor used for modifying the height of the recoater blade.

**4.** Method according to any one of claims 1 to 3 wherein the movement is a vertical movement towards a top calibration stop or towards a bottom calibration stop.

**5.** Method according to any one of claims 1 to 4 wherein the first distance is equal to -100 mm.

**6.** Method according to any one of claims 1 to 5 wherein the second distance is equal to +100 mm.

**7.** Method according to any one of claims 1 to 6 wherein the prior calibration operation comprises an initial step of positioning the recoater blade linked to the proximity sensor at a predetermined distance from the calibration stop.

FIGURE 1A

FIGURE 1B

**FIGURE 2**

**FIGURE 4**

```
         ┌──────────────────────────────────────┐                   ┐
  300 ─┐  │   définir une butée de calibration   │                   │
         └──────────────────────────────────────┘                   │
                           │                                         │
         ┌──────────────────────────────────────┐                   │
  305 ─┐  │      placer le racleur dans une      │                   │
         │        position intermédiaire          │                   │
         └──────────────────────────────────────┘                   │
                           │                                         │
         ┌──────────────────────────────────────┐                   │
  310 ─┐  │   déplacer le racleur vers la butée  │◄─────────┐        │
         │     de calibration d'un incrément     │          │        │
         └──────────────────────────────────────┘          │      calibration
                           │                                │        │
    315 ─┐    ╱──────────────────────────╲                  │        │
          ╱         butée de calibration   ╲────────────────┘        │
          ╲            atteinte?           ╱        non              │
            ╲──────────────────────────╱                             │
                           │ oui                                     │
         ┌──────────────────────────────────────┐                   │
  320 ─┐  │    estimer la distance initiale /    │                   │
         │          position initiale            │                   │
         └──────────────────────────────────────┘                   ┘

         ┌──────────────────────────────────────┐                   ┐
  325 ─┐  │      calculer la hauteur du racleur  │                   │
         └──────────────────────────────────────┘                   │
                           │                                         │
         ┌──────────────────────────────────────┐                   │
  330 ─┐  │      déplacer le racleur en hauteur  │                   │
         └──────────────────────────────────────┘                   │
                           │◄──────────────────────────┐             │
         ┌──────────────────────────────────────┐      │            │
  335 ─┐  │   former une couche de matériau       │      │         fabrication
         │   visqueux et créer la partie          │      │            │
         │   correspondante de l'objet            │      │            │
         └──────────────────────────────────────┘      │            │
                           │                            │            │
    340 ─┐    ╱──────────────────────────╲              │            │
    ◄─────── ╱          objet fabriqué?     ╲            │            │
        oui   ╲                            ╱   non       │            │
            ╲──────────────────────────╱                │            │
                           │                            │            │
         ┌──────────────────────────────────────┐      │            │
  345 ─┐  │      déplacer le support de           │──────┘            │
         │      fabrication en hauteur            │                   │
         └──────────────────────────────────────┘                   ┘
```

# FIGURE 3

## RÉFÉRENCES CITÉES DANS LA DESCRIPTION

**Documents brevets cités dans la description**

- US 6764636 B